# EUROPEAN PATENT SPECIFICATION

(11) **EP 4 455 926 B1**
(45) Date of publication and mention of the grant of the patent: **19.08.2026**
(21) Application number: 24170332.1
(22) Date of filing: 15.04.2024
(51) Int. Cl.: G06F 30/13, G06F 30/20

(54) **PROJECTING COST METRICS FROM AN ENGINEERING MODEL TO AN ARCHITECTURAL MODEL**
PROJEKTION VON KOSTENMETRIKEN VON EINEM TECHNISCHEN MODELL AUF EIN ARCHITEKTONISCHES MODELL
PROJECTION DE MESURES DE COÛT D'UN MODÈLE D'INGÉNIERIE À UN MODÈLE ARCHITECTURAL

(30) Priority: 28.04.2023 US 202318141206
(43) Date of publication of application: 30.10.2024
(73) Proprietor: Autodesk, Inc., San Francisco, CA 94105 (US)
(72) Inventor: BANDARA, Konara Mudiyanselage, San Francisco, 94105 (US); MAJEED, Musabbir Abdul, San Francisco, 94105 (US); KELLNER, Hans, San Francisco, 94105 (US)
(74) Representative: Fish & Richardson P.C.

(56) References cited:
- US-A1- 2008 077 364
- US-A1- 2021 287 138
- GHADERI PEIMAN ET AL: "Progressive Collapse Prevention Design of Framed RC Structures-Cost-Benefit Analysis", JOURNAL OF FAILURE ANALYSIS AND PREVENTION, SPRINGER, BOSTON, vol. 20, no. 4, 29 July 2020 (2020-07-29), pages 1244 - 1257, XP037227231, ISSN: 1547-7029, [retrieved on 20200729], DOI: 10.1007/S11668-020-00930-W
- VIVEK KUMAR C ET AL: "Evaluation of Response Spectartrum and Equivalent Static Analysis for recognizing the safest position of Floating Columns by ETABS in Zone V", 2022 INTERNATIONAL CONFERENCE ON COMPUTATIONAL INTELLIGENCE AND SUSTAINABLE ENGINEERING SOLUTIONS (CISES), IEEE, 20 May 2022 (2022-05-20), pages 209 - 216, XP034168232, DOI: 10.1109/CISES54857.2022.9844329
- PAOLA SANGUINETTI ET AL: "General system architecture for BIM: An integrated approach for design and analysis", ADVANCED ENGINEERING INFORMATICS, vol. 26, no. 2, 1 April 2012 (2012-04-01), AMSTERDAM, NL, pages 317 - 333, XP055430671, ISSN: 1474-0346, DOI: 10.1016/j.aei.2011.12.001
- BECK ANDRÉ T ET AL: "Risk-based cost-benefit analysis of frame structures considering progressive collapse under column removal scenarios", ENGINEERING STRUCTURES, ELSEVIER, AMSTERDAM, NL, vol. 225, 29 September 2020 (2020-09-29), XP086348238, ISSN: 0141-0296, [retrieved on 20200929], DOI: 10.1016/J.ENGSTRUCT.2020.111295

## Description

### BACKGROUND

This specification relates to computer aided design and simulation for the architecture, engineering, and construction (AEC) field. This specification also relates to calculation of cost metrics associated with physical structures. This specification also relates to visualization of cost metrics projected onto models of physical structures and to mapping of cost metrics between different types of models used in the AEC field.
P. Ghaderi et al, J. Fail. Anal. and Preven., 20, p. 1244-1257 (2020) describes a numerical study to examine the progressive collapse resistance of a reinforced concrete building.
US 2008/077364 A1 describes a computer-implemented building design and modeling system and method, including construction project cost estimation and scheduling.
V. Kumar C. et al, 1st International Conference on Computational Intelligence and Sustainable Engineering Solutions (CISES), p. 209-216 (2022) describes a study to determine the seismic reaction of a multistory construction with floating columns using static and response spectrum analysis.
US 2021/287138 A1 describes a method and system to optimize a structural engineering design.
P Sanguinetti et al, Advanced Engineering Informatics, 26, p. 317-333 (2012) describes an approach for providing design feedback during architectural design.
A. T. Beck et al, Engineering Structures, 225, 111295 (2020) describes a risk-based cost-benefit analysis of frame structures considering progressive collapse under column removal scenarios.

### SUMMARY

This specification describes technologies relating to computer aided design and simulation in architecture, engineering, and construction (AEC). The systems and techniques described here can be used to calculate cost metrics associated with physical structures such as multistory buildings and to visualize the cost metrics projected onto a model of the physical structure. The systems and techniques described here can be used to map the cost metrics associated with the physical structure from one type of model to a different type model used in the AEC field.

The invention is defined in the appended claims. In general, one or more aspects of the subject matter described in this specification can be embodied in one or more methods (and also one or more non-transitory computer-readable mediums tangibly encoding a computer program operable to cause a processing system to perform operations), including: obtaining, by a processing system, an engineering model of a physical structure, the engineering model specifying structural elements distributed among different levels of the physical structure; obtaining, by the processing system, a value of a cost metric for each of the structural elements; determining, by the processing system, an accumulated value of the cost metric for at least one area of an architectural massing model of the physical structure, the at least one area being associated with a predetermined level of the different levels of the physical structure, the determining including calculating a direct contribution to the accumulated value of the cost metric based on one or more of the structural elements located in the at least one area associated with the predetermined level, and calculating an indirect contribution to the accumulated value of the cost metric based on one or more structural elements located in at least one other area associated with the predetermined level or at least one other level of the different levels, the one or more structural elements located in the at least one other area associated with the predetermined level or the at least one other level being identified from at least one load path from the one or more of the structural elements located in the at least one area associated with the predetermined level; and displaying, by the processing system, using a graphical user interface, the accumulated value of the cost metric for the at least one area of the architectural massing model of the physical structure.

One or more aspects of the subject matter described in this specification can also be embodied in one or more systems including one or more processors; and a computer-readable medium storing instructions that, when performed, cause the one or more processors to perform operations including: obtaining an engineering model of a physical structure, the engineering model specifying structural elements distributed among different levels of the physical structure; obtaining a value of a cost metric for each of the structural elements; determining an accumulated value of the cost metric for at least one area of an architectural massing model of the physical structure, the at least one area being associated with a predetermined level of the different levels of the physical structure, the determining including calculating a direct contribution to the accumulated value of the cost metric based on one or more of the structural elements located in the at least one area associated with the predetermined level, and calculating an indirect contribution to the accumulated value of the cost metric based on one or more structural elements located in at least one other area associated with the predetermined level or at least one other level of the different levels, the one or more structural elements located in the at least one other area associated with the predetermined level or the at least one other level being identified from at least one load path from the one or more of the structural elements located in the at least one area associated with the predetermined level; and displaying using a graphical user interface, the accumulated value of the cost metric for the at least one area of the architectural massing model of the physical structure.

Calculating the indirect contribution to the accumulated value of the cost metric based on the one or more structural elements located in the at least one other area associated with the predetermined level or the at least one other level of the different levels can include: determining the at least one load path from the one or more of the structural elements located in the predetermined level for a predetermined load case; and identifying, for each structural element in the at least one load path, a reverse neighborhood including structural elements that are part of a reverse load path from the structural element to the one or more of the structural elements located in the predetermined level.

Determining an accumulated value of the cost metric for the at least one area can include: determining a set of dependent elements of the area, wherein the set of dependent elements can include the reverse neighborhood of each structural element in the area; and calculating the accumulated value of the cost metric for the area as a difference between i) an accumulated value of the cost metric for the physical structure without the set of dependent elements of the area and ii) an accumulated value of the cost metric for the physical structure without the area and the set of dependent elements of the area.

Determining an accumulated value of the cost metric for the at least one area can include: calculating an accumulated value of the cost metric for the physical structure; applying a load on the area; and calculating the accumulated value of the cost metric for the area as a difference between i) the accumulated value of the cost metric for the physical structure and ii) an accumulated value of the cost metric for the physical structure after applying the load on the area.

The methods and the operations can include, for each of the one or more structural elements located in the at least one other level of the different levels: i) determining a local neighborhood, wherein the local neighborhood can include structural elements adjacent to each structural element; ii) determining the indirect contribution to the accumulated value of the cost metric from the structural elements in the local neighborhood; iii) determining a local weight for each structural element in the local neighborhood; and iv) iteratively transferring the indirect contribution from the structural elements in the local neighborhood along a reverse load path.

Determining the indirect contribution to the accumulated value of the cost metric from the structural elements in the local neighborhood can include, for each structural element in the local neighborhood: removing, for each structural element, forces and/or moments caused on the structural element by one of each of the structural elements in the local neighborhood; and determining, for each structural element, an indirect contribution to the accumulated value of the cost metric from the one of each of the structural elements in the local neighborhood as a difference between a value of the cost metric for the structural element before and after the removing.

Determining the indirect contribution to the accumulated value of the cost metric from the structural elements in the local neighborhood can include, for each structural element in the local neighborhood: applying, for each structural element, a load to the forces and/or moments caused on the structural element by one of each of the structural elements in the local neighborhood; and determining, for each structural element, an indirect contribution to the accumulated value of the cost metric from the one of each of the structural elements in the local neighborhood as a difference between a value of the cost metric for the structural element before and after the applying.

Determining the indirect contribution to the accumulated value of the cost metric from the structural elements in the local neighborhood can include, for each structural element in the local neighborhood: determining, for each structural element, an indirect contribution to the accumulated value of the cost metric from a safety factor as a function of forces and/or moments caused on the structural element by one of each of the structural elements in the local neighborhood.

The cost metric can be one or more of weight, embodied carbon, materials cost, construction cost, and construction time. The methods and the operations can include: displaying, using the graphical user interface, the at least one load path on the engineering model, wherein displaying the at least one load path can include displaying, for one or more structural elements through which the at least one load path passes, one or more of at least one indicator representing a direction of load transfer at the structural element, at least one indicator representing a load at the structural element, and at least one indicator of a structural error condition.

The methods and the operations can include: receiving, using the graphical user interface, a modification to the architectural massing model; making a corresponding modification to the engineering model; displaying, using the graphical user interface, a modified at least one load path on the engineering model; and displaying using the graphical user interface, an updated accumulated value of the cost metric for the at least one area of the architectural massing model.

The methods and the operations can include: receiving at least one load modification; and displaying, using the graphical user interface, a modified at least one load path on the engineering model. The structural error condition can include a gap or a force imbalance in the load path at a junction involving the structural element. The methods and the operations can include displaying using the graphical user interface, suggested modifications to one or more of the load path, the engineering model, the architectural massing model or a combination thereof, until the structural error condition is resolved.

Particular embodiments of the subject matter described in this specification can be implemented to realize one or more of the following advantages. Cost metrics can be accurately calculated using a model of the structure that is convenient for calculations and simulations, such as an engineering/structural model. The cost metrics can be mapped from a model convenient for simulation purposes to a model that is more convenient for visualization purposes without structural mechanics knowledge, such as an architectural massing model. The mapping can be accurately performed using load paths to take into account the impact that architectural features belonging to a level of the physical structure have on the cost of structural elements across several levels of the physical structure and propagate the cost back to its root cause. Metric values displayed onto architectural models such as architectural massing models can be easily interpreted without structural engineering knowledge. Architectural and engineering models can be interactively modified and changes made to one of the models can be automatically propagated to the other. The load paths can be used to assist and guide the user in the automated detection and correction of structural errors in the physical structure. The user can also be guided and assisted in modifying the architectural design in order to optimize a cost metric associated with the physical structure.

The details of one or more embodiments of the subject matter described in this specification are set forth in the accompanying drawings and the description below. Other features, aspects, and advantages of the invention will become apparent from the description, the drawings, and the claims.

### BRIEF DESCRIPTION OF THE DRAWINGS

FIG. 1 shows an example of a system usable to facilitate computer aided design, simulation, and construction of physical structures.
FIGS. 2A-2B show an architectural massing model and a portion of a corresponding structural model of a physical structure.
FIGS. 3A-3B shows examples of a load path caused by gravity loading and a corresponding reverse load path or cost path.
FIG. 4 is a flowchart of an example of a process for determining and displaying a cost metric.
FIG. 5A shows an example of a structural model with nodes. FIG. 5B shows an example of a structural graph and a reverse neighborhood. FIG. 5C shows an example of a structural graph and a local neighborhood. FIG. 5D shows direct load transfer in a local neighborhood.
FIG. 6 is a flowchart of an example of a different process for determining a cost metric.
FIGS. 7 and 8 show flowcharts of examples of methods for global cost metric determination.
FIG. 9 is a schematic diagram of a data processing system including a data processing apparatus, which can be programmed as a client or as a server, and implement the techniques described in this document.

Like reference numbers and designations in the various drawings indicate like elements.

### DETAILED DESCRIPTION

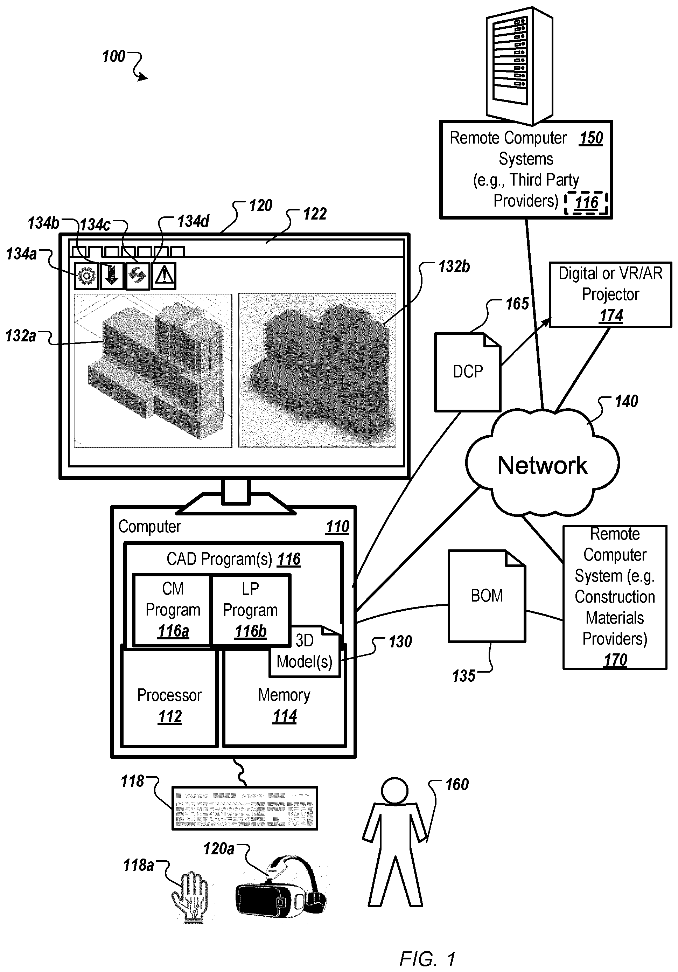

FIG. 1 shows an example of a system 100 usable to facilitate computer aided design, simulation, and construction of physical structures such as buildings. A computer 110 includes a processor 112 and a memory 114. The computer 110 can be connected to a network 140, which can be a private network, a public network, a virtual private network, etc. The processor 112 can be one or more hardware processors, which can each include multiple processor cores. The memory 114 can include both volatile and non-volatile memory, such as Random Access Memory (RAM) and Flash RAM. The computer 110 can include various types of computer storage media and devices, which can include the memory 114, to store instructions of programs that run on the processor 112, including Computer Aided Design (CAD) program(s) 116, which include a cost metric calculation and mapping program 116a and a load path calculation (LP) program 116b. Cost metric calculation and mapping (CM) program 116a can calculate one or more cost metrics associated with a physical structure. For example, CM program 116a can calculate an aggregate value of a cost metric for the physical structure based on an engineering or structural model 132b of the structure. For example, CM program 116a can calculate an aggregate value of a cost metric of the physical structure based on the individual values of the cost metric of the structural elements of the structural model of the physical structure. CM program 116a can map the cost metric from the structural model of the structure to a different model of the structure, such as an architectural massing model 132a of the structure. CM program 116a can use one or more load paths in the physical structure to map the cost metric from the engineering model to the architectural massing model taking into account the impact that architectural features belonging to a level of the physical structure have on the cost of structural elements across several levels of the physical structure and propagate the cost back to its root cause. Load path calculation program 116b can perform numerical simulations to determine one or more load paths in a physical structure.

In some instances, the numerical simulation performed by the systems and techniques described in this document can simulate one or more physical properties and can use one or more types of simulation to produce a numerical assessment of a physical response (e.g., structural response) of the modeled object. For example, finite element analysis (FEA), including linear static FEA, finite difference method(s), boundary element methods and analytical method(s) (e.g., moment distribution method or free body diagrams) can be used.

As used herein, CAD refers to any suitable program used to design physical structures that meet design requirements, regardless of whether or not the program is capable of interfacing with and/or controlling manufacturing equipment. Thus, CAD program(s) 116 can include Computer Aided Engineering (CAE) program(s), Computer Aided Manufacturing (CAM) program(s), Architecture, Engineering, and Construction (AEC) program(s), etc. The program(s) 116 can run locally on computer 110, remotely on a computer of one or more remote computer systems 150 (e.g., one or more third party providers' one or more server systems accessible by the computer 110 via the network 140) or both locally and remotely. Thus, a CAD program 116 can be two or more programs that operate cooperatively on two or more separate computer processors in that one or more programs 116 operating locally at computer 110 can offload processing operations (e.g., geometry generation and/or physical simulation operations) "to the cloud" by having one or more programs 116 on one or more computers 150 perform the offloaded processing operations. In some implementations, geometry generation operations, cost metric calculation and mapping operations, and load path calculation operations are run by one or more programs in the cloud and not in a geometry representation modeler that runs on the local computer. Moreover, in some implementations, the geometry generation, cost metric calculation and mapping, and/or load path calculation operations programs can be run in the cloud from an Application Program Interface (API) that is called by a program, without user input through a graphical user interface.

The CAD program(s) 116 present a user interface (UI) 122 on a display device 120 of the computer 110, which can be operated using one or more input devices 118 of the computer 110 (e.g., keyboard and mouse). Note that while shown as separate devices in FIG. 1, the display device 120 and/or input devices 118 can also be integrated with each other and/or with the computer 110, such as in a tablet computer (e.g., a touch screen can be an input/output device 118, 120). Moreover, the computer 110 can include or be part of a virtual reality (VR) and/or augmented reality (AR) system. For example, the input/output devices 118, and 120 can include VR/AR input controllers, gloves, or other hand manipulating tools 118a, and/or a VR/AR headset 120a. In some instances, the input/output devices can include hand-tracking devices that are based on sensors that track movement and recreate interaction as if performed with a physical input device. In some implementations, VR and/or AR devices can be standalone devices that may not need to be connected to the computer 110. The VR and/or AR devices can be standalone devices that have processing capabilities and/or an integrated computer such as the computer 110, for example, with input/output hardware components such as controllers, sensors, detectors, etc.

In any case, a user 160 can interact with the CAD program(s) 116 to generate, visualize, and/or optimize different 3D model(s) 132a, 132b. The 3D model(s) can be stored in model document(s) 130. In the example shown in FIG. 1, two different models 132a, 132b of the same physical structure (a multistory building) are displayed.

Architectural massing model 132a is a 3D model including architectural elements representing the outline of the physical structure, e.g., facades, floors, and roofs. Massing model 132a can be used to display cost metrics associated with the physical structure. For example, aggregate values of a cost metric associated with different areas of the architectural massing model 132a can be displayed on the massing model 132a using a color map that associates a set of values of a metric to specific colors.

Engineering model 132b is a 3D structural model that includes structural elements of the physical structure, such as beams, columns, slabs, shear walls, foundations, roof trusses, etc. Each structural element can have an associated value of a cost metric. Values of a cost metric associated with each structural element can be displayed on the structural element in structural model 132a using a color map or other form of visualization.

Structural model 132b can be automatically generated by CAD program(s) 116 using one or more generative design processes. CAD program(s) 116 can generate model 132b automatically based on design objective(s) and constraint(s), i.e., design criteria, where the structural design (i.e., the structural elements of the physical structure) can be iteratively optimized based on simulation feedback (e.g., based on a numerical, physics simulation). Note that, as used herein, "optimization" (or "optimum") does not mean that the best of all possible designs is achieved in all cases, but rather, that a best (or near to best) design is selected from a finite set of possible designs that can be generated within an allotted time, given the available processing resources. The design criteria can be defined by the user 160, or by another party and imported into the CAD program(s) 116. For example, the structural design can be optimized to resist gravity loads and/or lateral loads.

CM program 116a can be used to determine and visualize cost metrics. For example, program 116a can determine values of cost metrics for each structural element of model 132b and use these values to determine the accumulated values of the cost metrics to be displayed on massing model 132a. LP program 116b can be used to determine one or more load paths in the physical structure to determine the cost associated with each structural element and the contribution of each structural element to the accumulated value of the cost metric associated with different areas of massing model 132a.

The user 160 or another party can select 134a one or more cost metrics to be calculated and displayed. Cost metrics can encompass metrics related to design issues. For example, the user 160 or another party can select 134a metrics such as weight, embodied carbon, materials cost, construction cost, and construction time. Architectural and engineering models can be interactively modified and changes made to one of the models can be automatically propagated 134c to the other in real time. Load paths can also be displayed 134b, for example, on the engineering model 132b. In an example, the one or more load paths can be used to guide the user in performing structural design tasks. The load paths can be used to assist and guide the user in the automated detection and correction of structural errors 134d in the physical structure. The user can also be guided and assisted in modifying the architectural design in order to optimize a cost metric associated to the physical structure.

Once the user is satisfied with the design, structural model 132b can be used to generate a 3D model 130 containing the structural and non-structural elements that will be used in constructing the physical structure. For example, a BIM (Building Information Management) model can be generated. The BIM model can be used to generate a bill of materials (BOM) 135 including elements that will be used for construction. The BOM can be stored, exported to an electronic document, and/or sent to a remote computer system 170, such as one or more construction material providers. Note that an electronic document (which for brevity will simply be referred to as a document) can be a file, but does not necessarily correspond to a file. A document may be stored in a portion of a file that holds other documents, in a single file dedicated to the document in question, or in multiple coordinated files. In addition, the user 160 can save or transmit the 3D model(s) for later use.

In addition, in some implementation, no physical manufacturing is involved. The systems and techniques described herein are applicable to any suitable 3D modelling software. Thus, in some implementations, the CAD program(s) 116 can render the 3D model 132 to a document 165 of an appropriate format for visual display, such as by a digital or a VR or AR projector 174 or other high resolution display device. Other applications are also possible. A user can make design changes to the architectural massing model and/or the engineering model in the VR environment and visualize the impact of the design changes on a cost metric in near real-time.

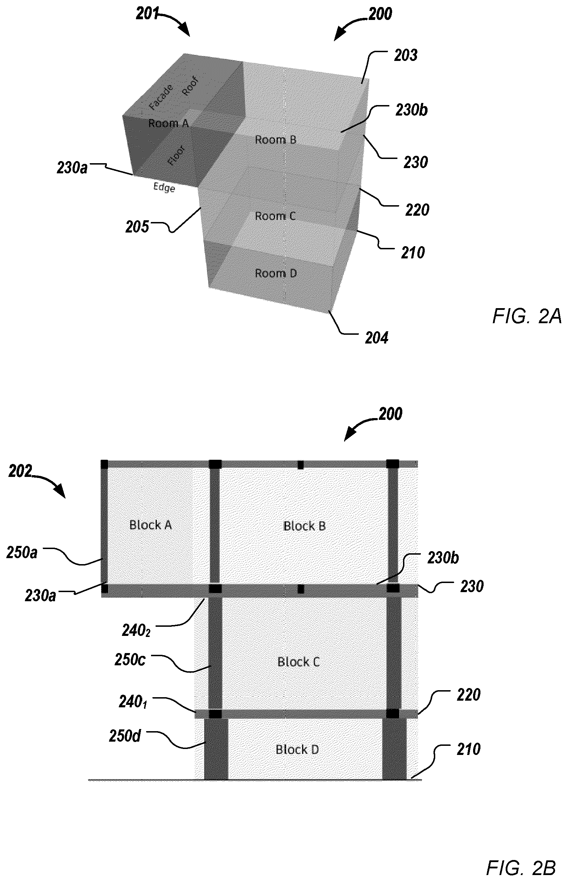

FIGS. 2A and 2B show examples of different models 201, 202 of a physical structure 200 corresponding to a multistory building. FIG. 2A shows an architectural massing model 201 of building 200 that includes three levels 210, 220, and 230 corresponding to a ground (L_{G}) 210, a first (L₁) 220, and a second (L₂) 230 level of the building. A level denotes a horizontal plane. Massing model 201 further includes the roof 203 (L_{R}) and facades 205 of the building. The space enclosed between the second level 230 and the roof 203 is divided into two different areas A, B (also called rooms or blocks) 230a, 230b. The lower levels define two further areas C, D. Cost metrics associated with the building such as embodied carbon, weight, materials' cost, and construction's cost and time can be projected onto the massing model 201 to get an overview of how different areas of the architectural design contribute to a specific metric. This can help to visualize and identify parts of the design that are the biggest contributors to a cost metric.

FIG. 2B shows a side view of an engineering or structural model 202 corresponding to a portion of structure 200 overlaid over a side view of massing model 201. Model 202 includes horizontal structural elements (beams 240) and vertical structural elements (columns 250). Beams 240 are located on a single level. Columns 250 span two levels. For simplicity, we can assign columns 250 to their corresponding upper level.

The individual contributions of structural elements 240, 250 to a cost metric can be used to determine aggregated values of the cost metric to be displayed on the architectural massing model 201. A naive approach to map a cost metric from the structural elements of structural model 202 to the architectural massing model would be to first determine a per-level value M_{Li} of the metric summing the contributions of all the structural elements that belong to the level Lᵢ, ${M}_{{L}_{i}} = {\sum }_{j ∈ {C}_{{L}_{i}}} M \left({c}_{j}\right) + {\sum }_{j ∈ {B}_{{L}_{i}}} M \left({b}_{j}\right) + {\sum }_{j ∈ {S}_{{L}_{i}}} M \left({s}_{j}\right)$, *Lᵢ* ∈ *L.*

The cost metric M_{Li} associated with a level Li is thus a sum of the costs of all the columns cⱼ from the set of columns *C*_{Li}, the beams bⱼ from the set of beams *B*_{Li}, and slabs sⱼ from the set of slabs *S*_{Li} belonging to that level. In the example of FIGS. 2A, 2B, this would result in a set of per-level metrics M_{LG}, M_{L1}, M_{L2}, M_{LR} corresponding, respectively to the ground, first, second level, and roof levels. The per-level metrics can then be projected to the different areas A, B, C, D to determine per-area metrics M_{ΩA}, M_{ΩB}, M_{ΩC}, M_{ΩD} proportional to floor areas (e.g., floor area of area A, a_{A} and floor area of area B, a_{B}) to project the metric onto the different areas as ${M}_{{Ω}_{A}} = \frac{{a}_{A} \left({M}_{{L}_{R}}+\frac{{M}_{{L}_{2}}}{2}\right)}{{a}_{A} + {a}_{B}} , {M}_{{Ω}_{B}} = \frac{{a}_{B} \left({M}_{{L}_{R}}+{M}_{{L}_{2}}\right)}{2 \left({a}_{A}+{a}_{B}\right)} , {M}_{{Ω}_{C}} = \frac{{M}_{{L}_{1}} + {M}_{{L}_{2}}}{2} , {M}_{{Ω}_{D}} = {M}_{{L}_{G}} + \frac{{M}_{{L}_{1}}}{2}$

However, this naive approach does not provide an accurate overview of the root cause of the cost assigned to an area of the massing model 201. In the example of FIG. 2B, column thickness increases as we descend towards the ground level. Column 250d on the ground floor is thicker than columns 250c, 250a because the columns in the ground floor carry loading from the entire structure. Consequently, column 250d would contribute with a high cost for the ground level, even though the cost comes from the upper levels rather than the ground level itself.

The cost of a structural element such as a beam bⱼ^{Li} of the set of beams *B*_{Li} of a given level Lᵢ or a column cⱼ^{Li} of the set of columns *C*_{Li} in a given level Lᵢ can be considered to be an aggregate of cost metrics caused not only by level Li but also the other levels Lₖ ∈ *L*\Lᵢ from the set of levels *L.* The cost of a slab sⱼ^{Li} of the set of slabs *S*_{Li} of a given level Lᵢ does not follow this rule as slabs do not take the load path of other structural elements. $M \left({c}_{j}\right) = M \left({c}_{j}^{{L}_{i}}\right) + {\sum }_{{L}_{k} ∈ L \ {L}_{i}} M \left({c}_{j}^{{L}_{k}}\right) , j ∈ {C}_{{L}_{i}} ,$ $M \left({b}_{j}\right) = M \left({b}_{j}^{{L}_{i}}\right) + {\sum }_{{L}_{k} ∈ L \ {L}_{i}} M \left({b}_{j}^{{L}_{k}}\right) , j ∈ {B}_{{L}_{i}} ,$ $M \left({s}_{j}\right) = M \left({s}_{j}^{{L}_{i}}\right) , j ∈ {S}_{{L}_{i}} .$

The cost metric M_{Li} associated to level Lᵢ can then be calculated taking into account both direct contributions from level Lᵢ and indirect contributions from the other levels as ${M}_{{L}_{i}} = {\sum }_{j ∈ {C}_{{L}_{i}}} M \left({c}_{j}^{{L}_{i}}\right) + {\sum }_{{L}_{m} ∈ L \ {L}_{i}} {\sum }_{n ∈ {C}_{{L}_{m}}} M \left({c}_{n}^{{L}_{i}}\right) + s {\sum }_{j ∈ {B}_{{L}_{i}}} M \left({b}_{j}^{{L}_{i}}\right) + {\sum }_{{L}_{m} ∈ L \ {L}_{i}} {\sum }_{n ∈ {B}_{{L}_{m}}} M \left({b}_{n}^{{L}_{i}}\right) + + {\sum }_{j ∈ {S}_{{L}_{i}}} M \left({s}_{j}^{{L}_{i}}\right)$ .

Indirect contributions to cost from areas on the same level can also be taken into account to provide an accurate overview of the root cause of the cost assigned to an area of the architectural massing model. In the example of FIG. 2B, the cantilever effect caused by overhanging area A requires thicker beams 240₂ in the entire second level (i.e., also in area B), when compared to beams 240₁ in the first level. This means that beams 240₂ located in area B will have a high cost even though this cost is not due to area B itself but to the load distribution coming from area A.

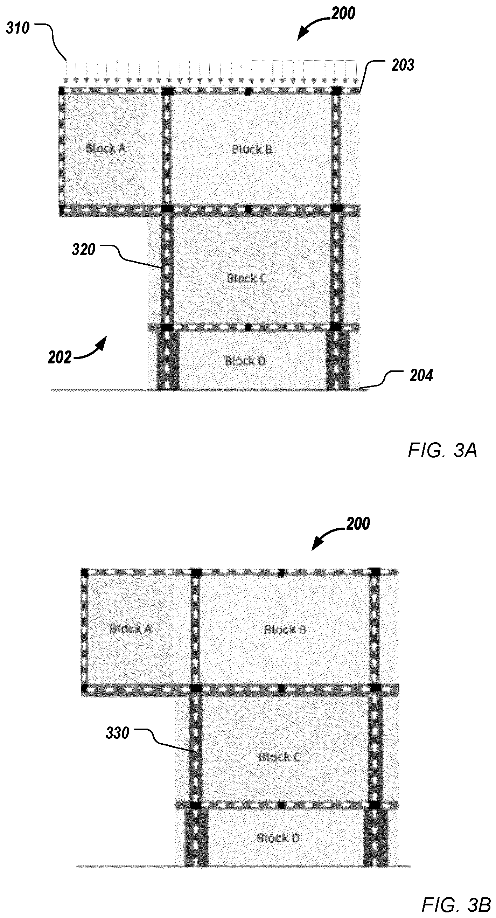

As the cost of a structural element located at an area of a given level is related to the loads it sustains, structural elements located at other areas of the same or other levels connected to the structural element via a load path, can contribute to the aggregate cost of the structural element due to load transmission. A load path is the path that a load takes from its point of application to the structural supports of the physical structure, typically the ground. In some examples, load paths can be calculated using finite element analysis, analytical methods. Gravity load paths originate from a slab (the roof slabs in this case) and pass through beams, columns, and walls until they reach the foundations of a building. FIG. 3A shows an example of a gravity load 310 applied to the roof 203 of structure 200 and the resulting load path 320 from the roof 203 to the ground level 204.

Reversing the load path, the contributions to the cost of the structural element can be traced back to the elements originating these contributions. The reverse load path or "cost path" can be used to project the cost of a structural element to the areas of the architectural massing model contributing to the cost of the structural element. FIG. 3B shows a reverse load path 330 corresponding to load path 320 caused by gravity load 310.

In some examples, other loads can be applied to determine a load path. For example, a seismic load can be applied to all the columns of the physical structure. For example, a lateral load can be applied instead or in addition to a gravity load. A lateral load can be applied to structural elements located at a façade or a portion of a façade of the physical structure. A lateral load can also be applied to shear walls of the physical structure. For example, lateral loads can be used to calculate a cost metric related to wind loading or pressure. Lateral loads can also be used to calculate a cost metric associated to seismic loads related to earthquakes.

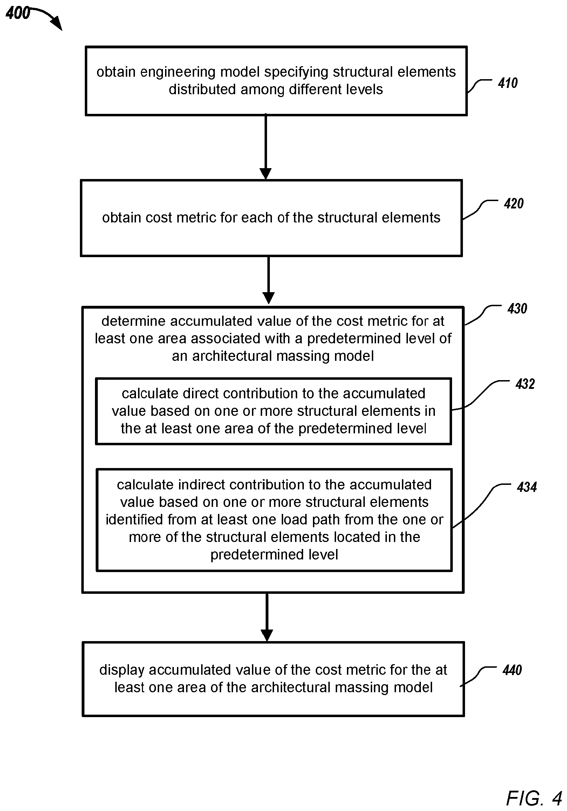

FIG. 4 is a flowchart of an example of a process 400 for determining and displaying a cost metric. Process 400 can be performed by a processing system.

At 410, an engineering model of a physical structure is obtained. The engineering model can specify structural elements distributed among different levels of the physical structure. In some examples, obtaining the engineering model can include loading a previously generated engineering model and/or creating the engineering model using generative design techniques and/or a user can interact with the CAD program(s) to generate the engineering model.

At 420, a value of a cost or cost metric for each of the structural elements is obtained. For example, the cost or cost metric can be one or more of weight, embodied carbon, materials cost, construction cost, and construction time. In some examples, the cost metric for a structural element depends on the weight and/or volume of the structural element. In some examples, the weight and/or volume of the structural element can be approximated using the structural element's information from the structural model. In some examples, the weight and/or volume of the structural element can take into account the presence of bolt holes in the structural elements and overlaps between structural elements at joints. In some examples, the materials cost metric for the structural element depends on the type of section of the element, the type of material, the materials cost per section of the element, the loading to which the element is subject, and/or the cost of reinforcements present in the structural element, among others. In some examples, the embodied carbon of a structural element depends on embodied carbon values for the structural element's material. In some examples, the embodied carbon metric can also take into account the section of the structural element.

At 430, an accumulated value of the cost metric for at least one area of an architectural massing model of the physical structure is determined. The at least one area can be associated with a predetermined level (e.g., an upper level) of the different levels of the physical structure. Determining the accumulated value can include calculating 432 a direct contribution to the accumulated value of the cost metric based on one or more of the structural elements located in the at least one area associated with the predetermined level, and calculating 434 an indirect contribution to the accumulated value of the cost metric based on one or more structural elements located in at least one other area associated with the predetermined level or at least one other level (e.g., a lower level) of the different levels, the one or more structural elements located in the at least one other area associated with the predetermined level or at least one other level being identified from at least one load path from the one or more of the structural elements located in the at least one area associated with the predetermined level.

At 440, the accumulated value of the cost metric for the at least one area of the architectural massing model of the physical structure can be displayed using a graphical user interface. In some examples, the processing system can guide and assist a user in modifying the architectural massing model in order to optimize a cost metric associated to the physical structure. For example, a modification to the architectural massing model can be received by the graphical user interface. Changes to the architectural massing model can be automatically propagated to the engineering model. For example, the processing system can make corresponding modifications to the engineering model. In some examples, the engineering model corresponding to the updated architectural massing model can be regenerated using a generative design program.

In some examples, the graphical user interface can be used to display one or more load paths. For example, a load path can be displayed over the structural model, e.g., overlaid using partial transparency. Different types of loads can be selected. For example, one or more of wind load, gravity, seismic, and solid pressure load can be selected to show how the loads are transferred through the structural model. For instance, structural elements through which a load path passes can be highlighted in the structural model. In some examples, the structural elements can be highlighted using an indicator that represents a load at the structural element. For example, the structural elements can be highlighted using a predetermined color. In some examples, the color can be proportional to the load that the structural element supports. In some examples, a numerical indicator of the load supported by the structural element can be displayed in the vicinity of the structural element. In some examples, the structural elements can be highlighted using a direction indicator representing a direction of load transfer at the structural element, such as by using one or more arrows. The directional indicators can help visualize the load transfer through an element. For example, a column may form a T junction with a beam below. The load path can go down through the column and then split in two directions through the beam. Directional indicators such as arrows can be used to show the load transfer in both directions through the beam. In some examples, the size of the direction indicator can be proportional to the load the structural element supports. In some examples, a structural element of the engineering model can be selected using the graphical user interface to highlight the structural elements transferring load from this structural element following a forward load path to the ground. In some examples, a reverse load path can additionally or alternatively be displayed. For example, the reverse load path from a structural element that has been selected using the graphical user interface can be displayed by highlighting the structural elements with a forward load path that passes through this element.

In some examples, the structural elements can also be highlighted using an indicator of a structural error condition. In some examples, the processing system can detect if there is a gap or disconnection in the load path and display a structural error condition indicator on the structural element(s) involved in the gap. For example, the processing system can detect if the structural elements joining at a junction are correctly connected and/or if the load flows in the direction of the load path in agreement with the applied load and/or if the load flows from the beginning of the load path to the end of the load path without gaps in the load path. In some examples, the processing system can check whether the forces at the junctions between structural elements through which the load path passes are in equilibrium. For example, the forces can include one or more of shear forces, axial forces, bending moments, and torsional forces. If the forces are not in equilibrium, the processing system can display a structural error condition indicator on one or more structural elements joined at the junction.

The load path visualization can be used to redesign the building. The processing system can highlight areas of the structural model that need to be redesigned and assist the user in the redesign process. For example, the processing system can display suggested modifications to the architectural massing model, structural model and/or load path until the structural model is structurally sound. For example, the processing system can display suggestions until the structural error condition is resolved.

The load path visualization can also be used to analyze the impact of static and/or dynamic loads on the structure. For example, the loads applied to the structure can be modified. For example, a static and/or a dynamic load can be added to or subtracted from a load applied on the structure. In some examples, a load change can be caused by changes to non-structural assets to be placed inside the structure, such as moving a plant room to a different area in the same or a different level. Changes to the load path caused by the load modification can be visualized. A modified load path can be displayed on the engineering model. In some examples, differences between a load path corresponding to the previous load and the modified load path can be highlighted. For example, the load paths can be visualized during a simulation of a dynamic load such as an earthquake affecting the physical structure. The load path visualization can also be used to analyze the impact of non-structural assets on the structure. For example, a model of an air conditioning (AC) unit can be added to the structure to see how load paths would change after the installation of the AC unit.

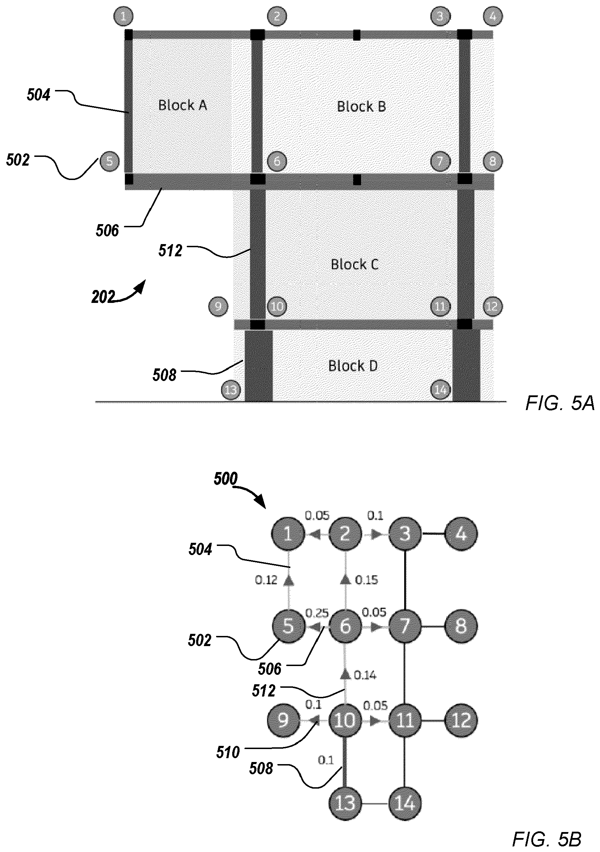

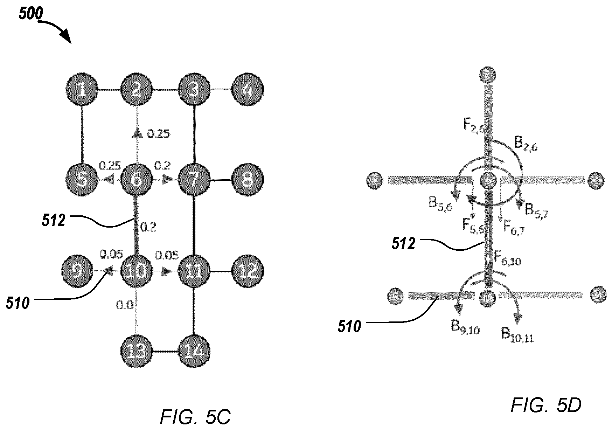

In some examples, structural model 202 can be represented as a graph. This can facilitate storage, processing, and/or visualization of load paths and/or reverse load paths in the structure. In some examples, load paths and/or reverse load paths can be stored, processed, and/or visualized as directed or undirected graphs, irrespective of the format in which structural model 202 is stored. FIG. 5A shows geometric nodes 502 of structural model 202. Each geometric node 502 in structural model 202 can be represented as a node 502 in a graph 500, as shown in FIG. 5B. Columns 504, 508, 512 and beams 506 in the structural model 202 correspond to edges 504, 508, 512, and 506 in the graph 500. As shown in FIGS. 5B, 5C, columns 504, 508, 512 can correspond to vertical edges 504, 508, 512 in the graph 500. Beams 506 can correspond to horizontal edges 506 in the graph, as shown in FIG. 5B. An edge <ij> 508 joining node "i" and node "j" on the graph can have an associated cost metric Mᵢⱼ corresponding to the cost of a respective structural element (beam or column) in the structural model 202. Cost metric Mᵢⱼ of element <ij> can be calculated as a sum of a contribution to the cost from the structural element 508 itself Mᵢⱼⁱⁱ and the indirect contributions Mᵢⱼ^{pq} from other structural elements <pq> that transfer load to element <ij> along a load path. Arrows 510 in FIG. 5B indicate reverse load transfer (or reverse cost transfer) from element 508 along a reverse load path. The numerical values shown in FIG. 5B correspond to reverse load transfer ratios. Elements in the graph that are part of the reverse load path from element 508 are the "reverse neighborhood" *N*ᵢⱼ^{r} of element 508.

For example, the distribution of cost M_{10,13}^{10,13} of ground level column <10,13> in FIG. 5A is given by the sum of a direct contribution from the column itself M_{10,13}^{10,13} (ground level) and indirect contributions from M_{10,13}^{9,10}, Mi_{10,13}^{10,11}, M_{10,13}^{6,10} (first level), M_{10,13}^{5,6}, M_{10,13}^{6,7}, M_{10,13}^{2,6}, M_{10,13}^{1,5} (second level), M_{10,13}^{1,2}, M_{10,13}^{2,3} (roof). Consequently, when projecting the cost from the structural model back to the architectural massing model, element <10,13> will directly contribute to the cost of the ground level and will indirectly contribute to the cost of the first level, the second level, and the roof.

Cost metric Mᵢⱼ of element <ij> can be expressed as ${M}_{ij} = {M}_{ij}^{ij} + {\sum }_{pq ∈ {N}_{ij}^{r}} {M}_{ij}^{pq}$. This expression can be normalized by Mᵢⱼ, which gives $1 = \frac{{M}_{ij}^{ij}}{{M}_{ij}} + {\sum }_{pq ∈ {N}_{ij}^{r}} \frac{{M}_{ij}^{pq}}{{M}_{ij}}$. We can define reverse neighborhood weights rᵢⱼ^{pq} as ${r}_{ij}^{pq} = \frac{{M}_{ij}^{pq}}{{M}_{ij}}$. The reverse neighborhood weight rᵢⱼ^{pq} represents the ratio of the contribution from edge <pq> to the total cost of edge <ij>. Replacing rᵢⱼ^{pq} in the normalized expression for Mᵢⱼ shows that that the reverse neighborhood weights possess the property of partition of unity, $1 = {r}_{ij}^{ij} + {\sum }_{pq ∈ {N}_{ij}^{r}} {r}_{ij}^{pq}$*.* The reverse neighborhood weights rᵢⱼ^{pq} can be used to determine the cost metric of level *L*ᵢ as ${M}_{{L}_{i}} = {\sum }_{i , j ∈ {ℤ}_{{L}_{i}}} \left[{M}_{ij}^{ij}+{\sum }_{pq ∈ {N}_{ij}^{r}} {M}_{ij}^{pq}\right] = {\sum }_{i , j ∈ {ℤ}_{{L}_{i}}} {M}_{ij} \left[{r}_{ij}^{ij}+{\sum }_{pq ∈ {N}_{ij}^{r}} {r}_{ij}^{pq}\right]$, where ${ℤ}_{Li}$ denotes the set of all edges of graph 500 belonging to level *L*ᵢ.

The reverse neighborhood of a large physical structure would contain a high number of edges. However, direct load transfer only occurs among adjacent elements, that is, immediate neighbors of an element. This defines the "local neighborhood" of an element as the structural elements that share a node with the element. The local neighborhood of element <6,10> 512 is shown in FIG. 5C using arrows 510 to depict reverse load transfer (or reverse cost transfer) from element 512 to the elements in its local neighborhood. FIG. 5D shows the forces and moments applied on element <6, 10> 512 by its local neighborhood. Forces F_{6,7} and F_{5,6} are shear forces applied on column <6, 10>. Forces F_{2,6} and F_{6,10} are axial forces applied on column <6, 10>. The resultant forces (Fₜₒₚ, F_{bottom}) and moments (Bₜₒₚ, B_{bottom}) on column <6, 10> are given by *Bₜₒₚ* = *B*_{6,7} + *B*_{2,6} - *B*_{5,6}; *B_{bottom}* = *B*_{10,11}-*B*_{9,10}; *Fₜₒₚ* = *F*_{2,6} + *F*_{5,6} + *F*_{6,7}; *F_{bottom}* = *F*_{2,6} + *F*_{5,6} + *F*_{6,7} + *F*_{6,10}.

The cost metric Mᵢⱼ can also be expressed in terms of the indirect contribution from the local neighborhood, ${M}_{ij} = {M}_{ij}^{ij} + {\sum }_{pq ∈ {N}_{ij}^{l}} {\hat{M}}_{ij}^{pq}$. ${\hat{M}}_{ij}^{pq}$ represents the indirect contribution of edge <pq> on <ij> and also the indirect contribution of other edges in the complete reverse neighborhood that make a contribution to edge <pq>. Similarly to the cost metric calculated using the reverse neighborhood, the expression for the cost metric from the local neighborhood can be expressed in terms of local neighborhood weights ${\hat{r}}_{ij}^{pq} = \frac{{\hat{M}}_{ij}^{pq}}{{M}_{ij}}$ as ${M}_{ij} = {M}_{ij} {\hat{r}}_{ij}^{ij} + {\sum }_{pq ∈ {N}_{ij}^{l}} {M}_{ij} {\hat{r}}_{ij}^{pq}$. The local weights also satisfy the partition of unity property.

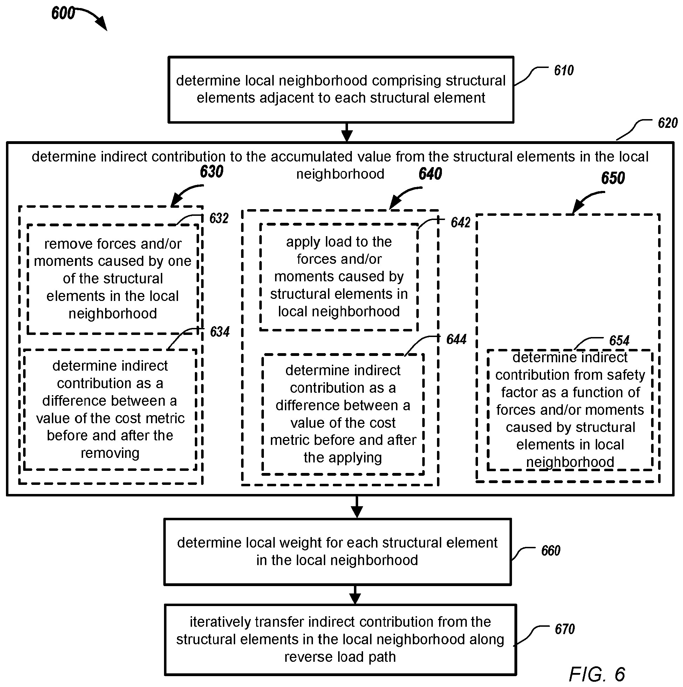

The local neighborhood approach can be used to compute cost metrics for each level or area of a level. FIG. 6 shows a flowchart of an example method 600 for computing cost metrics based on the local neighborhood approach.

At 610, a local neighborhood including structural elements adjacent to each structural element is determined. At 620, an indirect contribution to elements in the local neighborhood is determined. At 660, local weights for each element in the local neighborhood are determined. At 670, the indirect contribution from elements in the local neighborhood is iteratively transferred along a reverse load path (cost path). The general framework to iteratively transfer the cost along the reverse load path is detailed in Algorithm 1 below.

The indirect contribution at 620 can be determined using various methods. In an example, a local element removal method 630 is used at 620. Method 630 removes 632, from each element <pq> in the local neighborhood, reactions (forces F_{pq} and/or moments B_{pq}) to determine 634 the indirect contribution as a difference between a value of the cost metric before and after the removing, ${\hat{M}}_{ij}^{pq} \approx {\left.{M}_{ij}-{M}_{ij}\right|}_{\begin{matrix}{B}_{pq} \to 0 \\ {F}_{pq} \to 0\end{matrix}}$.

This can be used to determine 660 the local weights. This may require re-optimizing each element every time an element (with non-zero force or moment transfer) in its local neighborhood is removed. Once local weights are known, the cost from each element can be redistributed to its local neighborhood. To redistribute 670 the cost to the entire reverse neighborhood for computing the cost metric of each level, the indirect cost is progressively transferred 670 from elements in other levels to their local neighborhoods, as described in Algorithm 1 below.

In an example, a local load method 640 is used at 620. This method applies 642 load to the forces and/or moments caused by structural elements in the local neighborhood and determines 644 the indirect contribution as a difference between a value of the cost metric before and after the applying, ${\hat{M}}_{ij}^{pq} \approx \frac{{\hat{M}}_{ij} \left({B}_{pq}+{δB}_{pq}\right) - {\hat{M}}_{ij} \left({B}_{pq}\right)}{{δB}_{pq}} + \frac{{\hat{M}}_{ij} \left({F}_{pq}+{δF}_{pq}\right) - {\hat{M}}_{ij} \left({F}_{pq}\right)}{{δF}_{pq}}$

This can be used to determine the local weights 660. In an example, these weights can be normalized to satisfy the partition of unity condition, ${\hat{r}}_{ij}^{pq} ← \frac{{\hat{r}}_{ij}^{pq}}{{\hat{r}}_{ij}^{pq} + {\sum }_{pq ∈ {N}_{ij}^{l}} {\hat{r}}_{ij}^{pq}}$

To redistribute the cost to the entire reverse neighborhood for computing the cost metric of each level, the indirect cost is progressively transferred 670 from elements in other levels to their local neighborhoods, as described in Algorithm 1 below.

In an example, a method based on safety factors 650 is used at 620. This method determines 654 indirect contributions from safety factors as a function of forces and/or moments caused by structural elements in the local neighborhood. A portion of the cost of an element can be associated to a safety factor. The inverse of the safety factor can be used to distribute the cost amongst each of the safety factors, ${M}_{ij} \left({s}_{ij}^{k}\right) = \frac{1 / {s}_{ij}^{k}}{{\sum }_{k = 1}^{n} 1 / {s}_{ij}^{k}} {M}_{ij} , {M}_{ij} = {\sum }_{k = 1}^{n} {M}_{ij} \left({s}_{ij}^{k}\right)$ *.*

The cost for each safety factor can be divided amongst each reaction (forces F_{pq} and/or moments B_{pq}) based on a total stress σᵢⱼ(sᵢⱼ^{k}) used in the computation of safety factor sᵢⱼ^{k} as ${M}_{ij} {\left({s}_{ij}^{k}\right)}_{{B}_{pq}} = \frac{σ \left({B}_{pq}\right)}{{σ}_{ij} \left({s}_{ij}^{k}\right)} {M}_{ij} \left({s}_{ij}^{k}\right) , {M}_{ij} {\left({s}_{ij}^{k}\right)}_{{F}_{pq}} = \frac{σ \left({F}_{pq}\right)}{{σ}_{ij} \left({s}_{ij}^{k}\right)} {M}_{ij} \left({s}_{ij}^{k}\right)$.

This gives an indirect cost that can be used to determine 660 the local weights, ${\hat{M}}_{ij}^{pq} = {\sum }_{k = 1}^{n} \left[\frac{1 / {s}_{ij}^{k}}{{\sum }_{k = 1}^{n} 1 / {s}_{ij}^{k}}\frac{σ \left({B}_{pq}\right)}{{σ}_{ij} \left({s}_{ij}^{k}\right)}{M}_{ij}+\frac{1 / {s}_{ij}^{k}}{{\sum }_{k = 1}^{n} 1 / {s}_{ij}^{k}}\frac{σ \left({F}_{pq}\right)}{{σ}_{ij} \left({s}_{ij}^{k}\right)}{M}_{ij}\right]$

To redistribute the cost to the entire reverse neighborhood for computing the cost metric of each level, the indirect cost is progressively transferred 670 from elements in other levels to their local neighborhoods, as described in Algorithm 1.

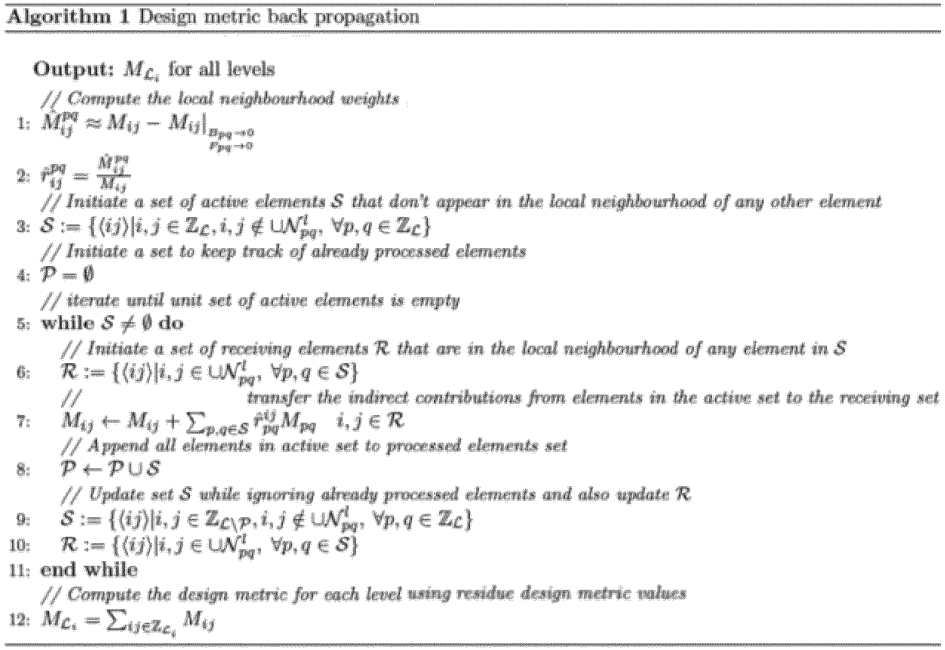

Once the local neighborhood weights are known, a set of "active" elements that do not appear in the local neighborhood of any other element can be initiated. This ensures that the algorithm initiates the cost transfer from a set of elements that do not transfer cost to other elements. In some examples, the initial active set includes the foundations of the building, i.e., ground level elements that transfer loading to the ground.

The algorithm progressively transfers cost in the local neighborhood. A set of "receiving" elements can be initiated. The receiving set includes elements that belong to the local neighborhood of any element in the current active set. The indirect contributions from elements in the active set can be transferred to the receiving set. The active set and the receiving set can be updated and the cost transfer repeated until there are no more elements to process in the active set.

Once the indirect cost transfer finishes, the variable Mᵢⱼ has a value that reflects the "true" cost of element <ij>. Accordingly, the design metric for each level Lᵢ can now be computed by adding the costs of the elements belonging to that level, ${M}_{{L}_{i}} = {\sum }_{i , j ∈ {ℤ}_{{L}_{i}}} {M}_{ij}$.

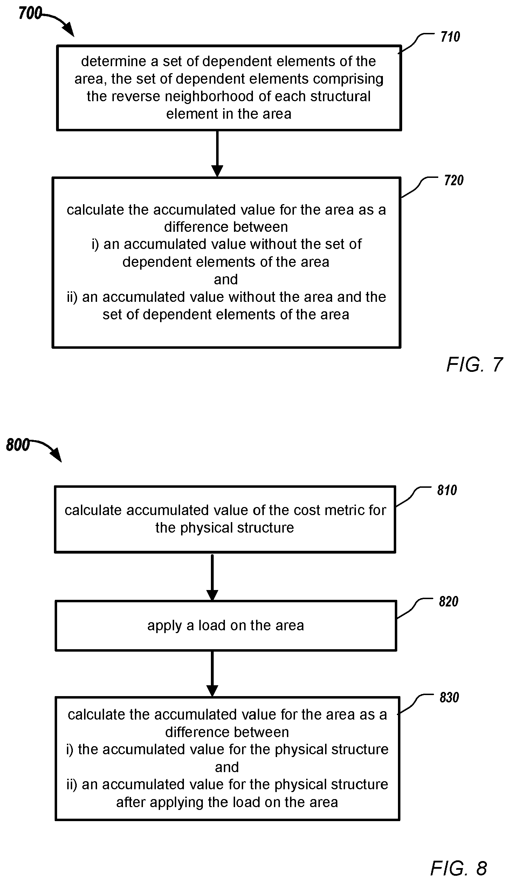

FIGS. 7 and 8 show examples of global methods for cost metric calculation. FIG. 7 shows a flowchart of a level removal method 700 for cost metric calculation. This method is similar to the local element removal method but at a global scale, removing levels rather than local elements. The idea behind method 700 is that the cost metric M_{Li} of level *L*ᵢ can be approximately calculated as the difference between the cost metric of the physical structure without the set of elements *D*_{Li} that depend on the level and the cost metric of the physical structure without the level *L*ᵢ and the elements *D*_{Li} that depend on the level.

At 710 a set of dependent elements of an area is determined, the set of dependent elements including the reverse neighborhood of each structural element in the area. For example, the set of dependent elements of level *Lᵢ* can be defined as ${D}_{{L}_{i}} : = \left\{∪{N}_{ij}^{r}\{ℤ}_{{L}_{i}}\left|∀i,j\right.∈{ℤ}_{{L}_{i}}\right\}$ .

At 720, the accumulated value for the area is calculated as a difference between i) an accumulated value without the set of dependent elements of the area and ii) an accumulated value without the area and the set of dependent elements of the area. For example, for level *L*ᵢ, ${M}_{{L}_{i}} \approx {M}_{L \ {D}_{{L}_{i}}} - {M}_{L \ \left\{{L}_{i}, {D}_{{L}_{i}}\right\}}$.

Using this method, the approximate cost metrics of each region in the example architectural massing model 201 of physical structure 200 of FIG. 2A would be *M_{A}* = *M_{Ω}-M_{Ω\ΩA}; M_{B}* = *M*_{*Ω*\*Ω*A} *- M*_{*Ω\*{*ΩA,ΩB*}}*; M_{C}* = *M*_{*Ω\*{*ΩA,ΩB*}} *-M_{ΩD}*; *M_{D}* = *M_{ΩD.}*

Since this is an approximate method, the obtained values might need to be normalized so that the sum of the metrics for the different areas adds up to the total value of the cost metric for the physical structure as ${M}_{{Ω}_{i}} ← \frac{{M}_{{Ω}_{i}}}{\sum {M}_{{Ω}_{i}}} {M}_{Ω}$, *i* ∈ {*A, B, C, D*}*.*

FIG. 8 shows a flowchart of a global loading method 800 for cost metric calculation. This method is similar to method 640 but applying global loads rather than local loads. The idea behind this method is to determine the cost metric for a level *L*ᵢ as the difference between the metric for the physical structure with a load imposed on level *L*ᵢ, M_{L+ δLi} and without the load, M*_{L}*.

At 810, the accumulated value of the cost metric for the physical structure is calculated.

At 820, a load is applied on the area. For example, if the area corresponds to level *L*ᵢ, a gravity load or a lateral load can be applied to level *L*ᵢ.

At 830, the cost metric for the area is calculated as the difference between the accumulate value for the physical structure with and without the load. For example, if the area corresponds to level *L*ᵢ as the difference between the metric for the physical structure with a load imposed on level *L*ᵢ, M_{L+δLi} and without the load, M*_{L}* as ${M}_{{L}_{i}} \approx \frac{{M}_{L + {δL}_{i}} - {M}_{L}}{{δL}_{i}}$, wherein δLi works as a normalization factor for the load. The resulting metric also needs to be further normalized as with method 700 so that the sum of the metrics for the different areas adds up to the total value of the cost metric for the physical structure. Variations of this method can involve making a small change to the floor area of each region and computing the sensitivity, i.e. the difference in the cost metric before and after the change.

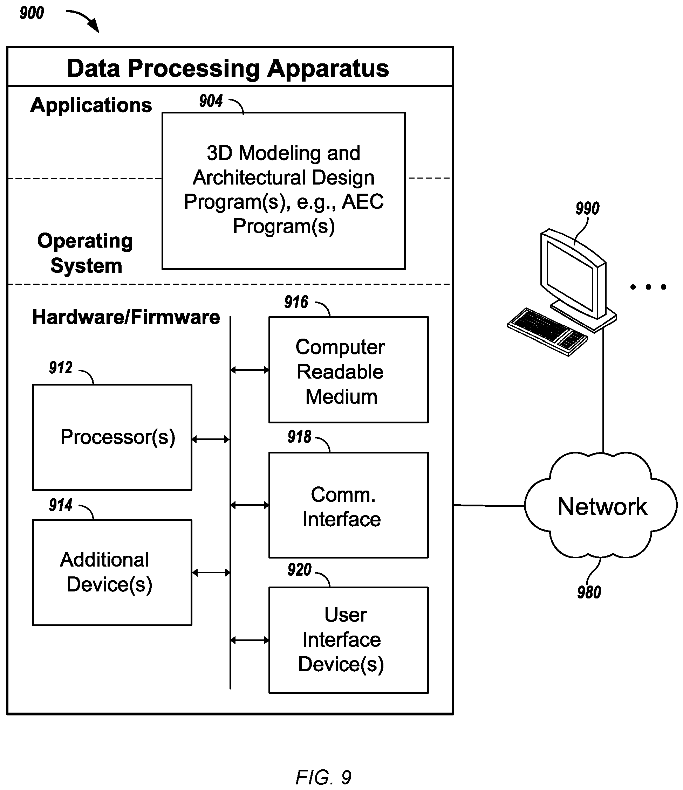

FIG. 9 is a schematic diagram of a data processing system including a data processing apparatus 900, which can be programmed as a client or as a server. The data processing apparatus 900 is connected with one or more computers 990 through a network 980. While only one computer is shown in FIG. 9 as the data processing apparatus 900, multiple computers can be used. The data processing apparatus 900 includes various software modules, which can be distributed between an applications layer and an operating system. These can include executable and/or interpretable software programs or libraries, including tools and services of one or more 3D modeling and architectural design program(s), e.g., AEC program(s) 904 that implement cost metric calculation and projection, as described above. Thus, the 3D modeling and architectural design program(s) 904 can be CAD program(s) 904 (such as CAD program(s) 116). Further, the program(s) 904 can potentially implement manufacturing control operations (e.g., generating and/or applying toolpath specifications to effect manufacturing of designed objects). Manufacturing constraints related to the manufacturing of designed objects, e.g., manufacturing constraints related to the sections of beams and/or columns can be taken into account in the cost computation. For example, a user can set or edit different manufacturing constraints during the building design and analyze the impact of these constraints on the cost of the building. The number of software modules used can vary from one implementation to another. Moreover, the software modules can be distributed on one or more data processing apparatus connected by one or more computer networks or other suitable communication networks.

The data processing apparatus 900 also includes hardware or firmware devices including one or more processors 912, one or more additional devices 914, a computer readable medium 916, a communication interface 918, and one or more user interface devices 920. Each processor 912 is capable of processing instructions for execution within the data processing apparatus 900. In some implementations, the processor 912 is a single or multi-threaded processor. Each processor 912 is capable of processing instructions stored on the computer readable medium 916 or on a storage device such as one of the additional devices 914. The data processing apparatus 900 uses the communication interface 918 to communicate with one or more computers 990, for example, over the network 980. Examples of user interface devices 920 include a display, a camera, a speaker, a microphone, a tactile feedback device, a keyboard, a mouse, and VR and/or AR equipment. The data processing apparatus 900 can store instructions that implement operations associated with the program(s) described above, for example, on the computer readable medium 916 or one or more additional devices 914, for example, one or more of a hard disk device, an optical disk device, a tape device, and a solid state memory device.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a non-transitory computer-readable medium for execution by, or to control the operation of, data processing apparatus. The computer-readable medium can be a manufactured product, such as hard drive in a computer system or an optical disc sold through retail channels, or an embedded system. The computer-readable medium can be acquired separately and later encoded with the one or more modules of computer program instructions, e.g., after delivery of the one or more modules of computer program instructions over a wired or wireless network. The computer-readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., an LCD (liquid crystal display) display device, an OLED (organic light emitting diode) display device, or another monitor, for displaying information to the user, and a keyboard and a pointing device, e.g., a mouse or a trackball, by which the user can provide input to the computer. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a browser user interface through which a user can interact with an implementation of the subject matter described is this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the invention have been described. Other embodiments are within the scope of the following claims. In addition, actions recited in the claims can be performed in a different order and still achieve desirable results.

## Claims

1. A method (400) comprising:
obtaining (410), by a processing system, an engineering model of a physical structure, the engineering model specifying structural elements distributed among different levels of the physical structure;
obtaining (420), by the processing system, a value of a cost metric for each of the structural elements, wherein the cost metric comprises weight and/or embodied carbon;
determining (430), by the processing system, an accumulated value of the cost metric for at least one area of an architectural massing model of the physical structure, the at least one area being associated with a predetermined level of the different levels of the physical structure, the determining comprising
calculating (432) a direct contribution to the accumulated value of the cost metric based on one or more of the structural elements located in the at least one area associated with the predetermined level, and
calculating (434) an indirect contribution to the accumulated value of the cost metric based on one or more structural elements located in at least one other area associated with the predetermined level or at least one other level of the different levels, the one or more structural elements located in the at least one other area associated with the predetermined level or the at least one other level being identified from at least one load path from the one or more of the structural elements located in the at least one area associated with the predetermined level;
displaying (440), by the processing system, using a graphical user interface, the accumulated value of the cost metric for the at least one area of the architectural massing model of the physical structure; and
causing modification, based on the at least one load path or the accumulated value of the cost metric, of the engineering model of the physical structure, wherein the modified engineering model of the physical structure is for use in constructing the physical structure.

2. The method of claim 1, wherein calculating the indirect contribution to the accumulated value of the cost metric based on the one or more structural elements located in the at least one other area associated with the predetermined level or the at least one other level of the different levels comprises:
determining the at least one load path from the one or more of the structural elements located in the predetermined level for a predetermined load case; and
identifying, for each structural element in the at least one load path, a reverse neighborhood comprising structural elements that are part of a reverse load path from the structural element to the one or more of the structural elements located in the predetermined level, optionally wherein determining, by the processing system, an accumulated value of the cost metric for the at least one area comprises:
determining a set of dependent elements of the area, wherein the set of dependent elements comprises the reverse neighborhood of each structural element in the area; and
calculating the accumulated value of the cost metric for the area as a difference between i) an accumulated value of the cost metric for the physical structure without the set of dependent elements of the area and ii) an accumulated value of the cost metric for the physical structure without the area and the set of dependent elements of the area.

3. The method of claim 1, wherein determining, by the processing system, an accumulated value of the cost metric for the at least one area comprises:
calculating an accumulated value of the cost metric for the physical structure;
applying a load on the area; and
calculating the accumulated value of the cost metric for the area as a difference between i) the accumulated value of the cost metric for the physical structure and ii) an accumulated value of the cost metric for the physical structure after applying the load on the area.

4. The method of claim 1, comprising, for each of the one or more structural elements located in the at least one other level of the different levels:
i) determining a local neighborhood, wherein the local neighborhood comprises structural elements adjacent to each structural element;
ii) determining the indirect contribution to the accumulated value of the cost metric from the structural elements in the local neighborhood;
iii) determining a local weight for each structural element in the local neighborhood; and
iv) iteratively transferring the indirect contribution from the structural elements in the local neighborhood along a reverse load path.

5. The method of claim 4, wherein determining the indirect contribution to the accumulated value of the cost metric from the structural elements in the local neighborhood comprises, for each structural element in the local neighborhood:
removing, for each structural element, forces and/or moments caused on the structural element by one of each of the structural elements in the local neighborhood; and
determining, for each structural element, an indirect contribution to the accumulated value of the cost metric from the one of each of the structural elements in the local neighborhood as a difference between a value of the cost metric for the structural element before and after the removing.

6. The method of claim 4, wherein determining the indirect contribution to the accumulated value of the cost metric from the structural elements in the local neighborhood comprises, for each structural element in the local neighborhood:
applying, for each structural element, a load to the forces and/or moments caused on the structural element by one of each of the structural elements in the local neighborhood; and
determining, for each structural element, an indirect contribution to the accumulated value of the cost metric from the one of each of the structural elements in the local neighborhood as a difference between a value of the cost metric for the structural element before and after the applying.

7. The method of claim 4, wherein determining the indirect contribution to the accumulated value of the cost metric from the structural elements in the local neighborhood comprises, for each structural element in the local neighborhood:
determining, for each structural element, an indirect contribution to the accumulated value of the cost metric from a safety factor as a function of forces and/or moments caused on the structural element by one of each of the structural elements in the local neighborhood.

8. The method of claim 1, wherein the cost metric further comprises one or more of materials cost, construction cost, and construction time.

9. The method of claim 1, comprising:
displaying, using the graphical user interface, the at least one load path on the engineering model, wherein displaying the at least one load path comprises displaying, for one or more structural elements through which the at least one load path passes, one or more of at least one indicator representing a direction of load transfer at the structural element, at least one indicator representing a load at the structural element, and at least one indicator of a structural error condition.

10. The method of claim 9, comprising:
receiving, using the graphical user interface, a modification to the architectural massing model;
making, by the processing system, a corresponding modification to the engineering model;
displaying, using the graphical user interface, a modified at least one load path on the engineering model; and
displaying, by the processing system, using the graphical user interface, an updated accumulated value of the cost metric for the at least one area of the architectural massing model.

11. The method of claim 9, comprising:
receiving at least one load modification; and
displaying, using the graphical user interface, a modified at least one load path on the engineering model.

12. The method of claim 9, wherein the structural error condition comprises a gap or a force imbalance in the load path at a junction involving the structural element, and wherein the processing system displays, using the graphical user interface, suggested modifications to one or more of the load path, the engineering model, the architectural massing model or a combination thereof, until the structural error condition is resolved.

13. The method of claim 1, wherein causing modification, based on the at least one load path or the accumulated value of the cost metric, of the engineering model of the physical structure comprises modifying the engineering model to correct a structural error in the physical structure and/or to optimize the cost metric.

14. The method of any preceding claim, further comprising
generating, based on the modified engineering model, a bill of materials, BOM, for use in constructing the physical structure, and
providing the BOM for use in constructing the physical structure.

15. The method of any preceding claim, further comprising constructing the physical structure.

16. A system comprising:
one or more processors; and
a computer-readable medium storing instructions that, when performed, cause the one or more processors to perform operations comprising the method of any one of claims 1 to 14.

17. A non-transitory computer-readable medium storing instructions executable by one or more processors to perform operations comprising the method of any one of claims 1 to 14.

## Patentansprüche

1. Verfahren (400), umfassend:
Erhalten (410) eines technischen Modells einer physischen Struktur durch ein Verarbeitungssystem, wobei das technische Modell Strukturelemente definiert, die auf verschiedene Ebenen der physischen Struktur verteilt sind;
Erhalten (420) eines Werts einer Kostenmetrik für jedes der Strukturelemente durch das Verarbeitungssystem, wobei die Kostenmetrik ein Gewicht und/oder grauen Kohlenstoff umfasst;
Bestimmen (430) eines akkumulierten Werts der Kostenmetrik für mindestens einen Bereich eines architektonischen Massenmodells der physischen Struktur durch das Verarbeitungssystem, wobei der mindestens eine Bereich mit einer vorbestimmten Ebene der verschiedenen Ebenen der physischen Struktur verknüpft ist, wobei das Bestimmen ein
Berechnen (432) eines direkten Beitrags zu dem akkumulierten Wert der Kostenmetrik basierend auf einem oder mehreren der Strukturelemente, die sich in dem mindestens einen Bereich befinden, der mit der vorbestimmten Ebene verknüpft ist, und ein
Berechnen (434) eines indirekten Beitrags zu dem akkumulierten Wert der Kostenmetrik basierend auf einem oder mehreren Strukturelementen umfasst, die sich in mindestens einem anderen Bereich, der mit der vorbestimmten Ebene verknüpft ist, oder mindestens einer anderen Ebene der verschiedenen Ebenen befinden, wobei das eine oder die mehreren Strukturelemente, die sich in dem mindestens einen anderen Bereich, der mit der vorbestimmten Ebene verknüpft ist, oder der mindestens einen anderen Ebene befinden, anhand mindestens eines Lastpfads von dem einen oder den mehreren der Strukturelemente, die sich in dem mindestens einen Bereich befinden, der mit der vorbestimmten Ebene verknüpft ist, identifiziert werden;
Darstellen (440) des akkumulierten Werts der Kostenmetrik für den mindestens einen Bereich des architektonischen Massenmodells der physischen Struktur unter Verwendung einer grafischen Benutzeroberfläche durch das Verarbeitungssystem; und
Bewirken einer Änderung des technischen Modells der physischen Struktur basierend auf dem mindestens einen Lastpfad oder dem akkumulierten Wert der Kostenmetrik, wobei das geänderte technische Modell der physischen Struktur zur Verwendung beim Bauen der physischen Struktur vorgesehen ist.

2. Verfahren nach Anspruch 1, wobei das Berechnen des indirekten Beitrags zu dem akkumulierten Wert der Kostenmetrik basierend auf dem einen oder den mehreren Strukturelementen, die sich in dem mindestens einen anderen Bereich, der mit der vorbestimmten Ebene verknüpft ist, oder der mindestens einen anderen Ebene der verschiedenen Ebenen befinden, Folgendes umfasst:
Bestimmen des mindestens einen Lastpfads von dem einen oder den mehreren Strukturelementen, die sich in der vorbestimmten Ebene befinden, für einen vorbestimmten Lastfall; und
Identifizieren einer inversen Nachbarschaft, umfassend Strukturelemente, die Teil eines inversen Lastpfads von dem Strukturelement zu dem einen oder den mehreren der Strukturelemente sind, die sich in der vorbestimmten Ebene befinden, für jedes Strukturelement in dem mindestens einen Lastpfad, wobei das Bestimmen eines akkumulierten Werts der Kostenmetrik für den mindestens einen Bereich durch das Verarbeitungssystem optional Folgendes umfasst:
Bestimmen einer Menge abhängiger Elemente des Bereichs, wobei die Menge abhängiger Elemente die inverse Nachbarschaft jedes Strukturelements in dem Bereich umfasst; und
Berechnen des akkumulierten Werts der Kostenmetrik für den Bereich als eine Differenz zwischen i) einem akkumulierten Wert der Kostenmetrik für die physische Struktur ohne die Menge abhängiger Elemente des Bereichs und ii) einem akkumulierten Wert der Kostenmetrik für die physische Struktur ohne den Bereich und die Menge abhängiger Elemente des Bereichs.

3. Verfahren nach Anspruch 1, wobei das Bestimmen eines akkumulierten Werts der Kostenmetrik für den mindestens einen Bereich durch das Verarbeitungssystem Folgendes umfasst:
Berechnen eines akkumulierten Werts der Kostenmetrik für die physische Struktur;
Aufbringen einer Last auf den Bereich; und
Berechnen des akkumulierten Werts der Kostenmetrik für den Bereich als eine Differenz zwischen i) dem akkumulierten Wert der Kostenmetrik für die physische Struktur und ii) einem akkumulierten Wert der Kostenmetrik für die physische Struktur nach dem Aufbringen der Last auf den Bereich.

4. Verfahren nach Anspruch 1, das für jedes des einen oder der mehreren Strukturelemente, die sich in der mindestens einen anderen Ebene der verschiedenen Ebenen befinden, Folgendes umfasst:
i) Bestimmen einer lokalen Nachbarschaft, wobei die lokale Nachbarschaft Strukturelemente umfasst, die mit jedem Strukturelement benachbart sind;
ii) Bestimmen des indirekten Beitrags zu dem akkumulierten Wert der Kostenmetrik von den Strukturelementen in der lokalen Nachbarschaft;
iii) Bestimmen eines lokalen Gewichts für jedes Strukturelement in der lokalen Nachbarschaft; und
iv) iteratives Übertragen des indirekten Beitrags von den Strukturelementen in der lokalen Nachbarschaft entlang eines inversen Lastpfads.

5. Verfahren nach Anspruch 4, wobei das Bestimmen des indirekten Beitrags zu dem akkumulierten Wert der Kostenmetrik von den Strukturelementen in der lokalen Nachbarschaft für jedes Strukturelement in der lokalen Nachbarschaft Folgendes umfasst:
Beseitigen von auf das Strukturelement durch eines von jedem der Strukturelemente in der lokalen Nachbarschaft bewirkten Kräften und/oder Momenten für jedes Strukturelement; und
Bestimmen eines indirekten Beitrags zu dem akkumulierten Wert der Kostenmetrik für jedes Strukturelement von dem einen von jedem der Strukturelemente in der lokalen Nachbarschaft als eine Differenz zwischen einem Wert der Kostenmetrik für das Strukturelement vor und nach dem Beseitigen.

6. Verfahren nach Anspruch 4, wobei das Bestimmen des indirekten Beitrags zu dem akkumulierten Wert der Kostenmetrik von den Strukturelementen in der lokalen Nachbarschaft für jedes Strukturelement in der lokalen Nachbarschaft Folgendes umfasst:
Aufbringen einer Last auf die auf das Strukturelement durch eines von jedem der Strukturelemente in der lokalen Nachbarschaft bewirkten Kräfte und/oder Momente für jedes Strukturelement; und
Bestimmen eines indirekten Beitrags zu dem akkumulierten Wert der Kostenmetrik für jedes Strukturelement von dem einen von jedem der Strukturelemente in der lokalen Nachbarschaft als eine Differenz zwischen einem Wert der Kostenmetrik für das Strukturelement vor und nach dem Aufbringen.

7. Verfahren nach Anspruch 4, wobei das Bestimmen des indirekten Beitrags zu dem akkumulierten Wert der Kostenmetrik von den Strukturelementen in der lokalen Nachbarschaft für jedes Strukturelement in der lokalen Nachbarschaft Folgendes umfasst:
Bestimmen eines indirekten Beitrags zu dem akkumulierten Wert der Kostenmetrik für jedes Strukturelement von einem Sicherheitsfaktor als eine Funktion von auf das Strukturelement durch eines von jedem der Strukturelemente in der lokalen Nachbarschaft bewirkten Kräften und/oder Momenten.

8. Verfahren nach Anspruch 1, wobei die Kostenmetrik ferner eines oder mehrere von Materialkosten, Baukosten und Bauzeit umfasst.

9. Verfahren nach Anspruch 1, umfassend:
Darstellen des mindestens einen Lastpfads auf dem technischen Modell unter Verwendung der grafischen Benutzeroberfläche, wobei das Darstellen des mindestens einen Lastpfads für ein oder mehrere Strukturelemente, durch die der mindestens eine Lastpfad passiert, ein Darstellen eines oder mehrerer von mindestens einem Indikator, der eine Lastübertragungsrichtung an dem Strukturelement repräsentiert, mindestens einem Indikator, der eine Last an dem Strukturelement repräsentiert, und mindestens einem Indikator eines Strukturfehlerzustands umfasst.

10. Verfahren nach Anspruch 9, umfassend:
Empfangen einer Änderung an dem architektonischen Massenmodell unter Verwendung der grafischen Benutzeroberfläche;
Vornehmen einer entsprechenden Änderung an dem technischen Modell durch das Verarbeitungssystem;
Darstellen eines geänderten mindestens einen Lastpfads auf dem technischen Modell unter Verwendung der grafischen Benutzeroberfläche; und
Darstellen eines aktualisierten akkumulierten Werts der Kostenmetrik für den mindestens einen Bereich des architektonischen Massenmodells unter Verwendung der grafischen Benutzeroberfläche durch das Verarbeitungssystem.

11. Verfahren nach Anspruch 9, umfassend:
Empfangen mindestens einer Laständerung; und
Darstellen eines geänderten mindestens einen Lastpfads auf dem technischen Modell unter Verwendung der grafischen Benutzeroberfläche.

12. Verfahren nach Anspruch 9, wobei der Strukturfehlerzustand eine Lücke oder ein Kräfteungleichgewicht in dem Lastpfad an einer Verbindung, die das Strukturelement betrifft, umfasst und wobei das Verarbeitungssystem unter Verwendung der grafischen Benutzeroberfläche empfohlene Änderungen an einem oder mehreren von dem Lastpfad, dem technischen Modell, dem architektonischen Massenmodell oder einer Kombination davon darstellt, bis der Strukturfehlerzustand behoben ist.

13. Verfahren nach Anspruch 1, wobei das Bewirken einer Änderung des technischen Modells der physischen Struktur basierend auf dem mindestens einen Lastpfad oder dem akkumulierten Wert der Kostenmetrik ein Ändern des technischen Modells umfasst, um einen Strukturfehler in der physischen Struktur zu korrigieren und/oder die Kostenmetrik zu optimieren.

14. Verfahren nach einem der vorhergehenden Ansprüche, ferner umfassend
ein Erzeugen einer Stückliste, BOM, zur Verwendung beim Bauen der physischen Struktur basierend auf dem geänderten technischen Modell und
Bereitstellen der BOM zur Verwendung beim Bauen der physischen Struktur.

15. Verfahren nach einem der vorhergehenden Ansprüche, ferner umfassend ein Bauen der physischen Struktur.

16. System, umfassend:
einen oder mehrere Prozessoren; und
ein computerlesbares Medium, das Anweisungen speichert, die, wenn sie durchgeführt werden, bewirken, dass der eine oder die mehreren Prozessoren Vorgänge, umfassend das Verfahren nach einem der Ansprüche 1 bis 14, durchführen.

17. Nichtflüchtiges computerlesbares Medium, das Anweisungen speichert, die durch einen oder mehrere Prozessoren ausführbar sind, um Vorgänge, umfassend das Verfahren nach einem der Ansprüche 1 bis 14, durchzuführen.

## Revendications

1. Procédé (400) comprenant :
l'obtention (410), par un système de traitement, d'un modèle d'ingénierie d'une structure physique, le modèle d'ingénierie spécifiant des éléments structurels répartis sur différents niveaux de la structure physique ;
l'obtention (420), par le système de traitement, d'une valeur d'une mesure de coût pour chacun des éléments structurels, dans lequel la mesure de coût comprend le poids et/ou le carbone incorporé;
la détermination (430), par le système de traitement, d'une valeur cumulée de la mesure de coût pour au moins une zone d'un modèle de masse architecturale de la structure physique, l'au moins une zone étant associée à un niveau prédéterminé des différents niveaux de la structure physique, la détermination comprenant
le calcul (432) d'une contribution directe à la valeur cumulée de la mesure de coût sur la base d'un ou de plusieurs des éléments structurels situés dans l'au moins une zone associée au niveau prédéterminé, et
le calcul (434) d'une contribution indirecte à la valeur cumulée de la mesure de coût sur la base d'un ou de plusieurs des éléments structurels situés dans au moins une autre zone associée au niveau prédéterminé ou à au moins un autre niveau des différents niveaux, les un ou plusieurs éléments structurels situés dans l'au moins une autre zone associée au niveau prédéterminé ou à l'au moins un autre niveau étant identifiés à partir d'au moins un chemin de charge à partir des un ou plusieurs des éléments structurels situés dans l'au moins une zone associée au niveau prédéterminé ;
l'affichage (440), par le système de traitement, à l'aide d'une interface utilisateur graphique, de la valeur cumulée de la mesure de coût pour l'au moins une zone du modèle de masse architecturale de la structure physique ; et
le fait d'entraîner une modification, sur la base de l'au moins un chemin de charge ou de la valeur cumulée de la mesure de coût, du modèle d'ingénierie de la structure physique, dans lequel le modèle d'ingénierie modifié de la structure physique est destiné à être utilisé dans la construction de la structure physique.

2. Procédé selon la revendication 1, dans lequel le calcul de la contribution indirecte à la valeur cumulée de la mesure de coût sur la base des un ou plusieurs éléments structurels situés dans l'au moins une autre zone associée au niveau prédéterminé ou à l'au moins un autre niveau des différents niveaux comprend :
la détermination de l'au moins un chemin de charge à partir des un ou plusieurs des éléments structurels situés dans le niveau prédéterminé pour un cas de charge prédéterminé ; et
l'identification, pour chaque élément structurel dans l'au moins un chemin de charge, d'un voisinage inverse comprenant des éléments structurels qui font partie d'un chemin de charge inverse de l'élément structurel vers les un ou plusieurs des éléments structurels situés dans le niveau prédéterminé, éventuellement dans lequel la détermination, par le système de traitement, d'une valeur cumulée de la mesure de coût pour l'au moins une zone comprend :
la détermination d'un ensemble d'éléments dépendants de la zone, dans lequel l'ensemble d'éléments dépendants comprend le voisinage inverse de chaque élément structurel dans la zone ; et
le calcul de la valeur cumulée de la mesure de coût pour la zone en tant que différence entre i) une valeur cumulée de la mesure de coût pour la structure physique sans l'ensemble d'éléments dépendants de la zone et ii) une valeur cumulée de la mesure de coût pour la structure physique sans la zone et l'ensemble d'éléments dépendants de la zone.

3. Procédé selon la revendication 1, dans lequel la détermination, par le système de traitement, d'une valeur cumulée de la mesure de coût pour l'au moins une zone comprend :
le calcul d'une valeur cumulée de la mesure de coût pour la structure physique ;
l'application d'une charge sur la zone ; et
le calcul de la valeur cumulée de la mesure de coût pour la zone en tant que différence entre i) la valeur cumulée de la mesure de coût pour la structure physique et ii) une valeur cumulée de la mesure de coût pour la structure physique après l'application de la charge sur la zone.

4. Procédé selon la revendication 1 comprend, pour chacun des un ou plusieurs éléments structurels situés dans l'au moins un autre niveau des différents niveaux :
i) la détermination d'un voisinage local, dans lequel le voisinage local comprend des éléments structurels adjacents à chaque élément structurel ;
ii) la détermination de la contribution indirecte à la valeur cumulée de la mesure de coût à partir des éléments structurels dans le voisinage local ;
iii) la détermination d'un poids local pour chaque élément structurel dans le voisinage local ; et
iv) le transfert itératif de la contribution indirecte des éléments structurels dans le voisinage local le long d'un chemin de charge inverse.

5. Procédé selon la revendication 4, dans lequel la détermination de la contribution indirecte à la valeur cumulée de la mesure de coût à partir des éléments structurels dans le voisinage local comprend, pour chaque élément structurel dans le voisinage local :
la suppression, pour chaque élément structurel, de forces et/ou de moments causés sur l'élément structurel par l'un de chacun des éléments structurels dans le voisinage local ; et
la détermination, pour chaque élément structurel, d'une contribution indirecte à la valeur cumulée de la mesure de coût de l'un de chacun des éléments structurels dans le voisinage local en tant que différence entre une valeur de la mesure de coût pour l'élément structurel avant et après la suppression.

6. Procédé selon la revendication 4, dans lequel la détermination de la contribution indirecte à la valeur cumulée de la mesure de coût à partir des éléments structurels dans le voisinage local comprend, pour chaque élément structurel dans le voisinage local :
l'application, pour chaque élément structurel, d'une charge sur les forces et/ou moments causés sur l'élément structurel par l'un de chacun des éléments structurels dans le voisinage local ; et la
détermination, pour chaque élément structurel, d'une contribution indirecte à la valeur cumulée de la mesure de coût de l'un de chacun des éléments structurels dans le voisinage local en tant que différence entre une valeur de la mesure de coût pour l'élément structurel avant et après l'application.

7. Procédé selon la revendication 4, dans lequel la détermination de la contribution indirecte à la valeur cumulée de la mesure de coût à partir des éléments structurels dans le voisinage local comprend, pour chaque élément structurel dans le voisinage local :
la détermination, pour chaque élément structurel, d'une contribution indirecte à la valeur cumulée de la mesure de coût à partir d'un facteur de sécurité en fonction de forces et/ou de moments causés sur l'élément structurel par l'un de chacun des éléments structurels dans le voisinage local.

8. Procédé selon la revendication 1, dans lequel la mesure de coût comprend en outre l'un ou plusieurs parmi le coût des matériaux, le coût de la construction et le temps de construction.

9. Procédé selon la revendication 1, comprenant :
l'affichage, à l'aide de l'interface utilisateur graphique, de l'au moins un chemin de charge sur le modèle d'ingénierie, dans lequel l'affichage de l'au moins un chemin de charge comprend l'affichage, pour un ou plusieurs éléments structurels à travers lesquels l'au moins un chemin de charge passe, d'un ou de plusieurs d'au moins un indicateur représentant une direction de transfert de charge au niveau de l'élément structurel, d'au moins un indicateur représentant une charge au niveau de l'élément structurel et d'au moins un indicateur d'une condition d'erreur structurelle.

10. Procédé selon la revendication 9, comprenant :
la réception, à l'aide de l'interface utilisateur graphique, d'une modification du modèle de masse architecturale ;
la réalisation, par le système de traitement, d'une modification correspondante au modèle d'ingénierie ;
l'affichage, à l'aide de l'interface utilisateur graphique, d'au moins un chemin de charge modifié sur le modèle d'ingénierie ; et
l'affichage, par le système de traitement, à l'aide de l'interface utilisateur graphique, d'une valeur cumulée mise à jour de la mesure de coût pour l'au moins une zone du modèle de masse architecturale.

11. Procédé selon la revendication 9, comprenant :
la réception d'au moins une modification de charge ; et
l'affichage, à l'aide de l'interface utilisateur graphique, d'au moins un chemin de charge modifié sur le modèle d'ingénierie.

12. Procédé selon la revendication 9, dans lequel la condition d'erreur structurelle comprend un écart ou un déséquilibre de force dans le chemin de charge au niveau d'une jonction impliquant l'élément structurel, et dans lequel le système de traitement affiche, à l'aide de l'interface utilisateur graphique, des modifications suggérées d'un ou de plusieurs parmi le chemin de charge, le modèle d'ingénierie, le modèle de masse architecturale ou une combinaison de ceux-ci, jusqu'à ce que la condition d'erreur structurelle soit résolue.

13. Procédé selon la revendication 1, dans lequel la modification, sur la base de l'au moins un chemin de charge ou de la valeur cumulée de la mesure de coût, du modèle d'ingénierie de la structure physique comprend la modification du modèle d'ingénierie pour corriger une erreur structurelle dans la structure physique et/ou pour optimiser la mesure de coût.

14. Procédé selon une quelconque revendication précédente, comprenant en outre
la génération, sur la base du modèle d'ingénierie modifié, d'une nomenclature, BOM, destinée à être utilisée dans la construction de la structure physique, et
la fourniture de la BOM destinée à être utilisée dans la construction de la structure physique.

15. Procédé selon une quelconque revendication précédente, comprenant en outre la construction de la structure physique.

16. Système comprenant :
un ou plusieurs processeurs ; et
un support lisible par ordinateur stockant des instructions qui, lorsqu'elles sont exécutées, amènent les un ou plusieurs processeurs à réaliser des opérations comprenant le procédé selon l'une quelconque des revendications 1 à 14.

17. Support non transitoire lisible par ordinateur stockant des instructions exécutables par un ou plusieurs processeurs pour réaliser des opérations comprenant le procédé selon l'une quelconque des revendications 1 à 14.
